Europäisches Patentamt

European Patent Office

Office européen des brevets

(19)

(11) Numéro de publication : **0 140 741**
**B1**

(12) **FASCICULE DE BREVET EUROPÉEN**

(45) Date de publication du fascicule du brevet :
**15.04.87**

(21) Numéro de dépôt : **84401829.1**

(22) Date de dépôt : **14.09.84**

(51) Int. Cl.⁴ : **C 09 C   1/30, B 01 D 57/02,
C 25 B   7/00, C 09 C   3/00,
C 09 C   1/36, B 01 D 21/00**

(54) Noveau gâteau de pigment et procédé pour son obtention.

(30) Priorité : **21.09.83 FR 8314986**

(43) Date de publication de la demande :
**08.05.85 Bulletin 85/19**

(45) Mention de la délivrance du brevet :
**15.04.87 Bulletin 87/16**

(84) Etats contractants désignés :
**AT BE CH DE FR GB IT LI LU NL SE**

(56) Documents cités :
**BE-A-   559 080
US-A- 4 110 189**

(73) Titulaire : **RHONE-POULENC CHIMIE DE BASE
25, quai Paul Doumer
F-92408 Courbevoie (FR)**

(72) Inventeur : **Deleuil, Michel
41, rue Vendôme
F-69006 Lyon (FR)**

(74) Mandataire : **Martin, Henri et al
RHONE-POULENC INTERSERVICES Service Brevets
Chimie 25, quai Paul Doumer
F-92408 Courbevoie Cédex (FR)**

# 0 140 741

## Description

La présente invention a pour objet un nouveau gâteau de pigment et notamment de silice précipitée.

Elle concerne également un procédé par électrodéposition pour son obtention qui s'applique en particulier à la déshydratation d'une suspension de silice dans le but de remplacer une opération de filtration et la silice qui peut être obtenue par ce procédé.

On sait que, lors de la préparation des silices précipitées, on fait réagir une source de silice, telle que silicate de sodium et un agent d'acidification tel que acide sulfurique ou anhydride carbonique, de manière à former une suspension de silice.

Mais cette suspension renferme une grande quantité d'eau. C'est pourquoi l'on soumet cette suspension à une opération de filtration par tout moyen connu tel que filtre rotatif. Il est également connu que la teneur en eau du gâteau, ou perte au feu du gâteau, est un facteur important dans le processus d'obtention de la silice quant aux caractéristiques du produit final.

Ce qui fait qu'actuellement, on est limité pour des raisons à la fois d'ordre technologique et de qualité du produit final.

Pour améliorer la filtration, on a déjà proposé, par exemple, des traitements chimiques. On a aussi offert de nouveaux types de filtres censés être plus performants.

Mais l'on conçoit aisément qu'avec la technologie habituelle, plus on augmente la quantité d'extrait sec dans le gâteau de silice et plus on risque d'aggraver le caractère d'irréversibilité du gâteau de silice, donc de nuire à la qualité et au contrôle du produit final.

De manière générale, on a proposé depuis longtemps de mettre en œuvre des procédés d'électro-osmoses pour réaliser la séparation de particules solides et d'une phase liquide (US 1 133 967 - US 1 156 715 - US 1 174 946) et d'appliquer ce type de traitement à une suspension d'argile (US 1 229 203).

De même, on a proposé la technique d'électrophorèse pour la séparation des solides des liquides (US 2 440 504).

Depuis, on a décrit et revendiqué des améliorations aux procédés et dispositifs, relatifs à la déshydratation d'une suspension de matières solides dans un véhicule liquide, sous l'action d'un champ électrique.

Cette technique a même connu un développement certain avec les argiles, voir par exemple les US 3 980 547, 4 003 811 et 4 003 819.

Le brevet US 4 110 189 décrit aussi un procédé d'enrichissement d'une suspension par électro-osmose. Ce procédé concerne en fait essentiellement des suspensions d'argile et il utilise de préférence un liquide conducteur.

Le brevet BE-559 080 concerne un procédé de séparation de suspensions de particules solides dans un fluide par électrophorèse. Ce procédé met en œuvre un liquide isolant à très forte résistivité, la tension utilisée étant généralement comprise entre 500 et 100 000 volts.

Toutefois, à la connaissance de la demanderesse, l'enseignement de l'électroconcentration n'a pas été appliqué jusqu'à ce jour aux suspensions de silice.

Or, les travaux de la demanderesse ont montré que, de manière surprenante, l'électrodéposition était applicable aux suspensions de silice et en particulier aux suspensions de silice précipitée.

Un objet de la présente invention est donc de proposer un nouveau procédé de concentration des suspensions de pigments, et en particulier de suspensions de silice précipitée et un gâteau de silice ainsi obtenu.

Un autre objet est de donner quelques mises en œuvre possibles de cette technique.

Les travaux de la demanderesse ont notamment mis en évidence que si on applique la technique de l'électrodéposition telle quel à une suspension de silice provenant de la précipitation par voie humide dans les conditions habituelles de précipitation, l'on n'observerait pas d'effet, c'est-à-dire qu'il n'y a pas dépôt de silice.

Mais les travaux de la demanderesse ont montré qu'un effet se produisait si l'on atteignait un certain seuil de résistivité.

Le procédé de l'invention consiste donc en un procédé de déshydratation d'une suspension de pigment et notamment en vue d'obtenir un gâteau de silice, à faible teneur en eau, et se caractérise par le fait que l'on amène la résistivité de ladite suspension à un seuil suffisant pour permettre le dépôt de pigment sous l'action d'un champ électrique, puis que l'on soumet cette suspension à l'action d'un champ électrique.

La valeur de ce seuil dépend bien évidemment d'un certain nombre de paramètres tels que pH, nature de l'électrode, composition du milieu.

La valeur de la résistivité peut ainsi varier dans de larges limites qui vont pratiquement, selon les conditions de l'électrodéposition de 100 à 15 000 $\Omega$cm et de préférence de 500 à 5 000 $\Omega$cm.

Avantageusement, la tension a une valeur comprise entre 15 et 150 volts et le champ une valeur comprise entre 5 et 100 V/cm.

Le procédé selon l'invention s'applique à d'autres pigments et notamment aux pigments d'oxyde de titane.

Le pigment est, en particulier, constitué par une silice de précipitation.

2

La demanderesse a notamment constaté que l'électrodéposition se produisait d'autant mieux que l'on s'éloignait du point isoélectrique de la silice, c'est-à-dire que l'on se situe dans un intervalle possible de pH de précipitation compris entre 3,5 et 10 mais que les faibles valeurs de pH correspondent aux valeurs élevées de résistivité.

Celles-ci dépendent également de la nature de l'électrode et seront plus importantes dans le cas d'une anode inattaquable que dans le cas d'une anode attaquable.

Bien entendu, notamment pour des raisons de consommation d'énergie, l'homme de métier n'a pas intérêt à augmenter trop la résistivité en tenant compte des exigences techniques et économiques d'une installation industrielle.

Pour une suspension de silice renfermant de 50 à 150 g/l de $SiO_2$, la résistivité de la suspension se situera normalement entre 1 000 et 5 000 $\Omega$cm.

Mais l'on ne se situerait pas en dehors de l'invention en adoptant une autre valeur pour des raisons particulières.

Un moyen simple pour augmenter la résistivité de la suspension consiste à éliminer, par lavage, les ions $Na^+$ et $SO_4^-$ provenant de la précipitation de la silice.

Ce lavage plus poussé peut être réalisé par apport d'eau désionisée à résistivité élevée (supérieure à 1 000 $\Omega$cm) par exemple à la suite du lavage habituel sur le filtre ou lors du délitage.

Par ailleurs, les travaux de la demanderesse ont montré que la productivité du procédé pouvait être considérablement améliorée en introduisant dans la suspension à déshydrater des additifs minéraux et/ou organiques.

Bien que l'on ne comprenne pas actuellement le mécanisme de l'action des additifs, on sait que au moins certains d'entre eux conduisent à une modification de l'état de la dispersion permettant d'opérer à des pH relativement élevés et voire même à des concentrations plus élevées.

Ainsi, dans le cas de la silice notamment, la présence d'une faible quantité d'alumine, par exemple sous forme d'aluminate de sodium joue un rôle favorable et permet de travailler à des pH d'au moins 6, ce qui est très intéressant dans le cas d'une application en caoutchouc par exemple. On peut aussi aussi faire appel à un silicate. Un additif intéressant s'est avéré être constitué par le baryum sous forme d'hydroxyde. L'hydroxyde de Pb s'est également montré efficace.

De même, on peut mettre en œuvre des dérivés tels que les amines aliphatiques ou aromatiques en général, l'ammoniac, la pyridine et des produits non azotés tels que le sulfosuccinate de sodium, le sulfonate diesterméthylique. Cette liste ne prétend pas, bien entendu, être exhaustive.

De manière générale, ces produits sont à utiliser à une dose de 400-1 200 ppm.

L'on doit faire remarquer que ces additifs, s'ils permettent d'améliorer le dépôt, ne le provoquent pas, c'est-à-dire que si l'on est dans des conditions où le dépôt ne se produit pas, la présence de ces additifs ne l'amènera pas, sauf bien entendu à élever parallèlement la résistivité de la suspension.

Un autre paramètre important est constitué par la nature de l'anode.

On pense qu'en raison de la corrosion électrique, le métal, se retrouvant à l'état d'impuretés dans le gâteau, participe à la formation du gâteau et, dans certaines conditions, serait à même de chasser l'eau incluse dans les pores du gâteau.

L'anode est notamment du groupe du Fe, du Cu, de l'Al, du Zn, du platine et du graphite.

Mais l'on doit compter avec un phénomène de passivation possible avec certains métaux comme l'Al ou l'acier inoxydable ou d'apport d'impuretés comme avec le zinc. Dans le cas de la passivation, on observe un dégagement d'oxygène qui vient perturber les phénomènes à l'anode et dans le second cas, il y a consommation de l'anode et pollution du produit.

C'est pourquoi on peut disposer des membranes semi-perméables entre l'anode et la cathode dans certaines formes de mise en œuvre.

Cette membrane peut être disposée du côté anodique. Mais on peut aussi prévoir une membrane du côté cathodique.

Selon une forme de réalisation de l'invention, on peut aussi utiliser une anode en graphite ou en platine.

Bien entendu, on peut mettre en œuvre tout procédé connu de précipitation de la silice à partir de solutions aqueuses de silicate de Na et d'un agent acidifiant, tel que $H_2SO_4$ et $CO_2$ et notamment tel que dans les FR 2 159 580 - 2 471 948 - 2 471 949 - 2 471 947 - 2 208 948 - 2 208 949 - 2 208 950.

Comme dit précédemment, la présente invention a également trait aux gâteaux de silice ainsi obtenus, remarquables par leur caractère de réversibilité et présentant de 15 à 40 % de matières sèches et un pH compris entre 3,5 et 10.

La demanderesse a apprécié la délitabilité de la manière suivante.

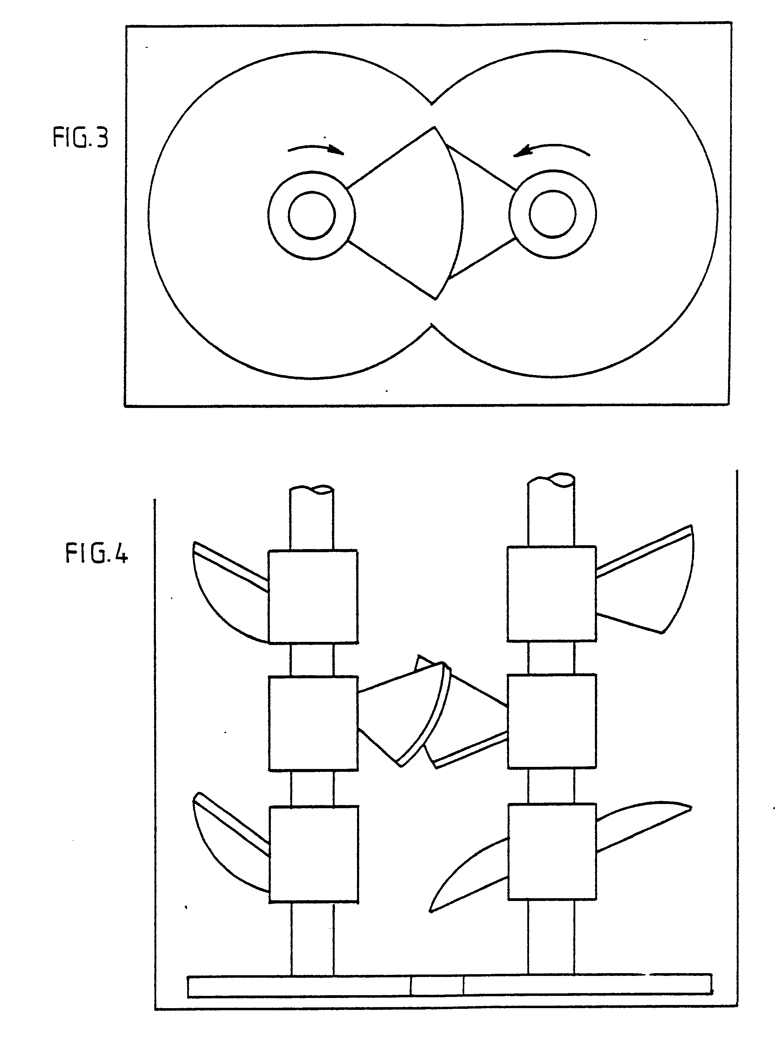

On remplit avec 6 kg de gâteau de silice une cuve de 8 litres. Cette cuve présente un agitateur constitué par une double hélice rotative et un disque rotatif, tournant à 400 tr/min et développant une puissance de 2 600 Watts selon les figures 3 et 4.

On mesure les puissances consommées au temps t = 0, t = 1 min et t = 3 min. Le gâteau est considéré comme délitable si la puissance consommée est inférieure à 1 000 watts au temps t = 3 min.

On pratique également un test rendant compte de l'aptitude de la bouillie à l'atomisation sur une bouillie soumise à agitation pendant 3 minutes dans le dispositif précédent.

On mesure ensuite le refus au tamis à 40 $\mu$m et on mesure l'extrait sec à 900 °C.

3

0 140 741

On considère que la bouillie est atomisable, sous forme pulvérulente, si l'on a moins de 16 % de refus à 40 μm.

Selon l'invention, on peut ainsi obtenir des gâteaux de silice qui, à un pH de l'ordre de 6 sont délitables et atomisables alors qu'ils présentent au moins 20 % de matières sèches et même à ce niveau de pH, de 20 à 28 % de matières sèches, ce qui est surprenant et en particulier, on peut obtenir, à ce niveau pH, des gâteaux ayant au moins 20 % de matières sèches pour des silices de surfaces spécifiques au moins égales à 200 m²/g.

Bien entendu, ces valeurs ne sont pas limitatives et on ne sortirait pas du concept de l'invention, par exemple, en augmentant le taux de matières sèches, en abaissant la valeur du pH.

L'homme de l'art sait, en particulier, qu'il doit tenir compte d'un certain nombre de facteurs tels que pH en fonction de l'application et du procédé d'obtention de la silice ($H_2SO_4$ ou $CO_2$).

Le procédé selon l'invention peut être mis en œuvre par tout type de dispositif tels qu'à éléments de dépôts rotatifs ou fixes, mettant en œuvre ou non des diaphragmes permsélectifs.

L'invention a également trait à la silice obtenue par séchage d'une suspension issue d'un gâteau selon l'invention.

Après délitage du gâteau, la suspension en résultant peut être séchée par tout moyen connu et, en particulier, par atomisation.

Un moyen avantageux consiste à mettre en œuvre le procédé d'après le brevet français 2 257 326 selon lequel on forme un écoulement puits-tourbillon symétrique avec un gaz chaud, à grande quantité de mouvement et on introduit la suspension issue du gâteau selon l'axe de symétrie de rotation de cet écoulement dans la zone de dépression relative dudit écoulement puits-tourbillon, la quantité de mouvement dudit écoulement puits-tourbillon, symétrique par rapport au flux axial de la suspension, étant suffisante pour provoquer la rupture du flux axial, sa dispersion, sa prise en charge et son séchage.

Exemples

Dans les exemples, on a mis en œuvre un dispositif illustré aux figures 1 et 2 pour déposer le gâteau de silice. Les figures 3 et 4 représentent le dispositif utilisé pour tester la délitabilité dudit gâteau.

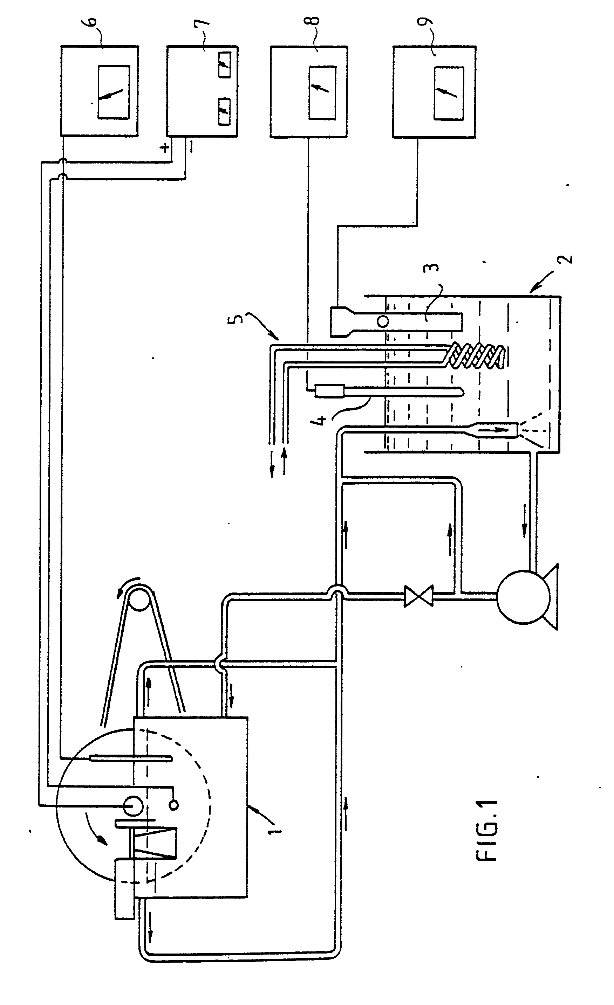

Ce dispositif comprend (figure 1)
— une cellule (1) d'électrodéposition
— un bac tampon (2) muni d'une électrode de conductivité (3) et d'une électrode de pH (4) ainsi que d'un système (5) de régularisation de la température
— un ensemble d'enregistreurs de température (6), de voltage et d'intensité (7), de pH (8) et de conductivité (9).

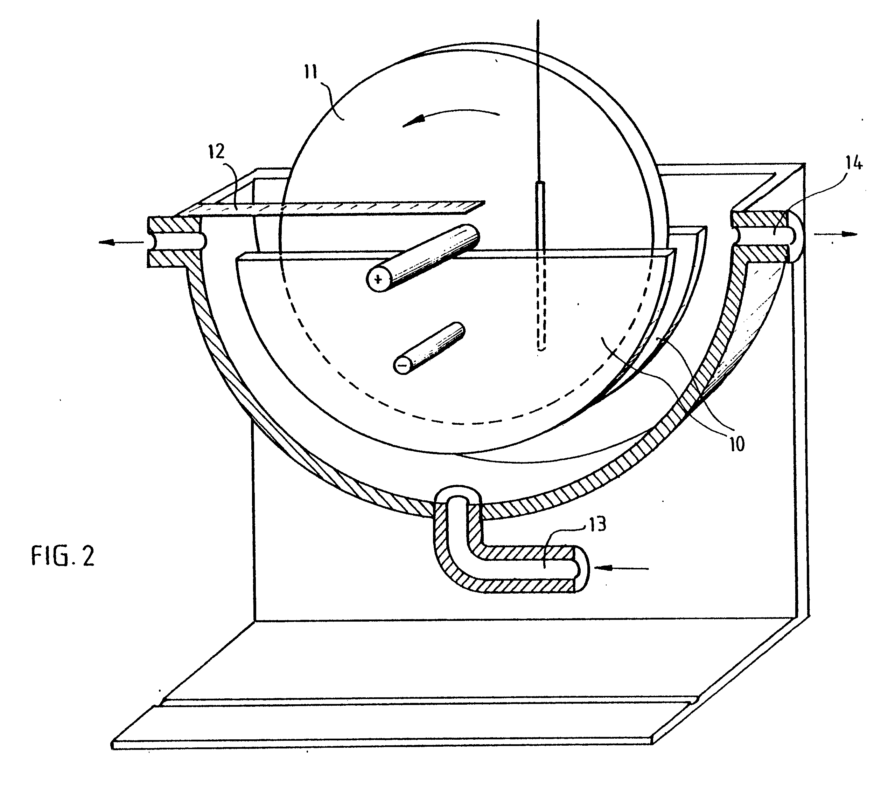

La cellule représente (figure 2)
— des cathodes (10)
— des anodes telles que (11)
— un couteau (12)
— des entrées et sorties d'eau (13, 14).

Dans les exemples, le champ électrique n'est placé que sur une seule face de la roue.

L'écartement cathode/anode tournante est de 3 cm, le diamètre de l'anode tournante est de 30 cm. Les électrodes sont en acier inoxydable (28 CNDT 18-12 Cr 16-20 % Ni 10-14 % stabilisé au Mo).

Le bac tampon est de taille suffisamment importante pour que le prélèvement du gâteau soit négligeable et que l'on considère que l'on opère à concentration constante.

Les caractéristiques de la silice sont appréciées par la mesure des surfaces BET et CTAB.

La surface spécifique BET est déterminée selon la méthode de BRUNAUER-EMMETT-TELLER décrite dans « The Journal of the American Chemical Society », Vol. 60, p. 309 — Février 1938.

La surface CTAB est la surface externe appréciée par adsorption de bromure de céthyl triméthyl ammonium à pH 9 selon la méthode exposée par JAY, JANZEN et G. KRAUS dans « Rubber Chemistry and Technology 44 (1971) p. 1287-1296.

Exemple 1

Cet exemple a pour but de montrer le comportement différent entre une argile et une silice de précipitation.

L'argile est un kaolin commercialisé sous la marque ARGIREC® B24.

Les conditions de travail sont les suivantes :
— concentration = 100 g/l de suspension
— pH = 7,5
— densité de courant = 100 A/m²
— résistivité = 1 050 Ωcm

On prend alors une bouillie de silice précipitée correspondant à une silice selon l'EP 18 866 de surface spécifique BET et CTAB = 175 m²/g. On se place également à pH = 7,5 pour une concentration de 100 g/l. On fait passer la même densité de courant, soit 100 A/m², résistivité = 170 Ωcm, tension = 5,10.

On n'observe aucun dépôt.

4

La demanderesse a alors constaté que la résistivité de la suspension de silico-aluminate de référence était de 1050 Ωcm au lieu de 170 Ωcm pour la silice.

Avec la même électrode, la demanderesse a observé que pour l'argile de référence, les meilleures conditions d'électrodéposition sont de 250 Ωcm (ce qui correspond, pour l'argile, à une concentration de 600 g/l).

Autrement dit, si l'homme de l'art essaie de se placer dans les conditions optimales pour l'argile et de les transposer à la silice, il est conduit à l'échec et ce d'autant que, pour l'argile, il apparaît que l'on doive abaisser la résistivité, au moins dans les conditions de l'expérience.

Avec une silice précipitée, dans les mêmes conditions de pH et de concentration, il lui faut élever la valeur de la résistivité jusqu'à 1 600 Ωcm pour observer un dépôt (tension = 48 V).

Cet exemple montre donc que le comportement de la silice est surprenant, eu égard à celui de l'argile.

## Exemple 2

Cet exemple a pour but de montrer le résultat du procédé comparativement à deux modes de filtration classique, à savoir par filtre sous vide et par filtre-presse, avec la même silice précipitée que précédemment.

|  | Filtre sous vide | Filtre presse | Electro- déposition selon l'invention |
|---|---|---|---|
| Perte au feu | 83 % (4,9 1/kg) | 77,5 % (3,44 1/kg) | 69 à 78 % (2,22 à 3,55 1/kg) |
| Délitabilité | Oui | Oui | Oui |
| Test d'atomisation | Oui | Non | Oui |

## Exemple 3

Dans cet exemple, pour une silice de même caractéristique, sous forme de poudre, on fait varier la teneur en eau du gâteau dans les conditions suivantes :

| Essais | 1 | 2 | 3 |
|---|---|---|---|
| Concentration g/l de la bouillie | 118 | 92 | 58 |
| pH | 6,8 | 7,1 | 7,6 |
| Densité de courant A/m$^2$ | 30 | 78 | 56 |
| Tension en volts | 51 | 220 | 210 |
| Résistivité (Ωcm) | 5 115 | 8 900 | 11 720 |

Les propriétés du gâteau sont les suivantes :

| Essais | Teneur en eau du gâteau | | pH gâteau |
|--------|-------------------------|--------|-----------|
|        | En % | En l/kg | |
| 1 | 77,7 | 3,5 | 6,35 |
| 2 | 70,7 | 2,34 | 6,2 |
| 3 | 68,6 | 2,2 | 6,2 |

| Essais | Test de délitabilité | | | Test d'atomisation |
|--------|------|--------|--------|--------------------|
|        | t=0 | t=1min | t=3min | Refus à 40 µm % |
| 1 | 350 | 105 | 58 | 7,25 |
| 2 | 2237 | 932 | 210 | 6,1 |
| 3 | 2673 | 818 | 473 | 4,82 |

A titre comparatif, sur une bouillie selon l'essai 1, un gâteau essoré sous vide présente une teneur en eau de 73 % (2,7 l/kg) et nécessite une puissance consommée à 3 minutes de 1 430 W et a un refus à 40 µm de 36,23.

Par ailleurs, pour arriver à ce résultat, il est nécessaire d'essorer sous vide un gâteau de 1 cm d'épaisseur pendant 1 h 20, alors qu'à l'essai 1, selon l'invention, le temps de séjour dans le champ électrique est seulement de 1 minute.

## Exemple 4

Influence des autres facteurs

Pour une même silice correspondant à l'essai 1 (BET = 175 $m^2/g$), les conditions les plus favorables, pour obtenir une siccité élevée (69-72 % d'eau) sont :
— concentration maximale (155 g/l)
— champ élevé (écartement minimum des électrodes) 38 V/cm
— résistivité moyenne (1 000 à 3 000 Ωcm)
— forte densité de courant (100 $A/m^2$)

Les conditions les plus favorables pour une consommation minimale sont au détriment de la productivité/hm² :
— densité de courant très faible (5 $A/m^2$)
— temps de séjour élevé (rotation 1/10$^e$ de tr/min)
— résistivité très élevée (6 000 Ωcm)

## Exemple 5

On prend une silice de grande surface CTAB = 250 $m^2/g$ et à prise d'huile DBP = 420 $cm^3$/100 g.
— filtration sous vide : perte au feu ≐ 87,5 % (7 l/kg)
— électrodéposition : perte au feu = 78 % à 81 % (3,35 à 4,25 l/kg)

Résultat au test précédent de délitabilité : oui

Les conditions d'électrodéposition sont les suivantes :
— concentration de 140 g/l — résistivité 2 000 Ωcm — 17 °C — pH = 7,5
— densité de courant = 100 $A/m^2$ — rotation 1/3 tr/min
— tension = 60 V

## Exemple 6

Cet exemple a pour but de montrer l'amélioration de la productivité par des additifs.

a) Dans les conditions écartement 3 cm, densité de courant 45 $A/m^2$, tension 29 V, mais en ayant une résistivité de 2 250 $\Omega$cm (moindre lavage initial économisant l'eau désionisée), la productivité n'est que de 6,2 kg de $SiO_2$ par h·m² et la consommation de 0,21 kwh/kg $SiO_2$.

On est amené à laver de façon sévère la silice pour monter à la résistivité de 4 650 $\Omega$cm, ou à trouver des additifs donnant de bons résultats à 2 250 $\Omega$cm.

Avec 1 000 ppm d'éthylène diamine dans l'eau, et une résistivité de 2 250 $\Omega$cm, la productivité passe de 6,2 kg $SiO_2$/h·m² à 39 kg $SiO_2$/h·m² et la siccité du gâteau reste identique à 75 % d'eau (soit 3 l/kg d'extrait sec).

b) Avec un dispositif à plaques comprenant une anode et une cathode en acier inoxydable de 100 cm², avec un écartement de 3 cm, on traite une suspension à 100 g/l de la même silice.

Le pH est de 7,5, la température de 20 °C. Avec une densité de courant de 60 A/m², on observe qu'il faut un minimum de 2 000 $\Omega$cm de résistivité pour observer la formation d'un dépôt alors que l'ajout d'hydroxyde de baryum Ba $(OH)_2$, $8H_2O$, à raison de 0,5 g/l de suspension (soit 2,18 g de baryum par kg de $SiO_2$ anhydre) conduit à un dépôt avec une résistivité initiale de 1 000 $\Omega$cm. On atteint le niveau maximum de performance dans ce cas avec un ajout de 0,75 g/l d'hydroxyde par litre de suspension (3,26 g Ba/kg $SiO_2$).

Le plomb mis en œuvre dans les mêmes conditions conduit à des résultats équivalents.

Si on ajoute 0,5 ml/l d'une bouillie d'aluminate de sodium (136 g/l d'$Al_2O_3$ et 165 g/l de $Na_2O$, soit 0,68 g de $Al_2O_3$ par kg de $SiO_2$), on obtient un gâteau de silice de perte au feu égale à 74 % avec une résistivité de 1 500 $\Omega$cm.

Par ailleurs, en ajoutant 2 g/l d'une solution de silicate à 370 g/l de $SiO_2$ et 113,8 g/l de $Na_2O$ (soit 7,4 g de $SiO_2$ par kg de $SiO_2$) avec une résistivité de 2 000 $\Omega$cm, on observe la formation d'un dépôt très uniforme, adhérant bien et stable alors que dans les mêmes conditions mais sans ajout de silicate, le dépôt a tendance à se décoller de l'anode.

## Exemple 7

Influence de la nature de l'électrode

a) Avec une anode de zinc, la déposition commence à exister dès la résistivité de 620 $\Omega$cm au lieu de 2 000 $\Omega$cm.

De plus, les gâteaux contiennent moins d'eau et les performances énergétiques sont meilleures :
— production de 60 kg/h·m² à 100 A/m² — tension 30 Volts
— siccité de l'ordre de 2,1-2,3 kg eau/kg $SiO_2$
— consommation de l'ordre de 0,05 kwh/kg $SiO_2$

b) Avec une électrode en graphite, on observe également la formation d'un dépôt pour une valeur plus faible de résistivité soit 850 $\Omega$cm au lieu de 2 000 $\Omega$cm.

## Exemple 8

Cet exemple montre un autre avantage du traitement d'une suspension de silice par le champ électrique et l'amélioration du comportement de cette bouillie pour une filtration ou une déposition ultérieure.

On passe une bouillie à 100 g/l entre deux électrodes. Un peu de silice se dépose à l'anode, le reste de la bouillie étant amené vers un appareil A. On constate que si A est une nouvelle cellule de déposition, les performances sont meilleures que dans la première cellule et que si A est un filtre, le gâteau a une meilleure lavabilité que si on n'était pas passé dans la première cellule d'électrodéposition.

## Revendications

1. Procédé de déshydratation d'une suspension de pigments minéraux, caractérisé par le fait que l'on amène la résistivité de ladite suspension à une valeur comprise entre 100 et 15 000 $\Omega$cm et notamment entre 500 et 5 000 $\Omega$cm et suffisante pour permettre le dépôt de pigment sous l'action d'un champ électrique, puis que l'on soumet cette suspension à l'action d'un champ électrique.

2. Procédé de déshydratation d'une suspension de silice, caractérisé par le fait que l'on amène la résistivité de la suspension à une valeur comprise entre 500 et 5 000 $\Omega$cm pour permettre le dépôt de silice sous l'action d'un champ électrique, puis que l'on soumet cette suspension à l'action d'un champ électrique.

3. Procédé selon l'une des revendications 1 et 2, caractérisé par le fait que la tension a une valeur comprise entre 15 et 150 Volts et le champ une valeur comprise entre 5 et 100 V/cm.

4. Procédé selon la revendication 1 ou 3, caractérisé par le fait que la suspension de pigment est constituée par une suspension d'oxyde de titane.

5. Procédé selon la revendication 2 ou 3, caractérisé par le fait que l'on met en œuvre une

suspension de silice de précipitation à un pH compris entre 3,5 et 10.

6. Procédé selon l'une des revendications 2, 3 ou 5 caractérisé par le fait que la suspension de silice renferme de 50 à 150 g/l de SiO$_2$ et présente une résistivité de 1 000 à 5 000 Ωcm.

7. Procédé selon l'une des revendications 1 à 6, caractérisé par le fait que l'on introduit un additif dans la suspension du groupe des additifs minéraux et organiques.

8. Procédé selon la revendication 7, caractérisé par le fait que l'additif est du groupe de l'hydroxyde de baryum, de l'aluminate et du silicate de sodium.

9. Procédé selon l'une des revendications 7 ou 8, caractérisé par le fait que la suspension renferme de 400 à 1 200 ppm d'additif.

10. Procédé selon l'une des revendications 1 à 9, caractérisé par le fait que l'anode est du groupe du Fe, du Cu, de l'Al et du Zn, le graphite et le platine.

11. Nouveau gâteau de silice présentant un caractère de réversibilité et de 15 à 40 % de matières sèches pour un pH compris entre 10 et 3,5, caractérisé par le fait qu'il peut être obtenu en mettant en œuvre le procédé selon l'une des revendications 2, 3 et 5 à 10.

12. Nouveau gâteau délitable selon la revendication 11, caractérisé par le fait qu'il présente un pH de 6 pour un taux de matières sèches compris entre 20 et 28 %.

13. Nouveau gâteau délitable selon la revendication 12, caractérisé par le fait qu'il présente au moins 20 % de matières sèches pour des silices de surfaces spécifiques au moins égales à 200 m$^2$/g.

## Claims

1. A process for the dehydration of a suspension of mineral pigments characterised in that the resistivity of said suspension is adjusted to a value of between 100 and 15 000 Ωcm and in particular between 500 and 5 000 Ωcm and sufficient to permit the deposit of pigment under the action of an electrical field, and then said suspension is subjected to the action of an electrical field.

2. A process for dehydration of a suspension of silica characterised in that the resistivity of the suspension is adjusted to a value of between 500 and 5 000 Ωcm to permit the deposit of silica under the action of an electrical field and then said suspension is subjected to the action of an electrical field.

3. A process according to one of claims 1 and 2 characterised in that the voltage is between 15 and 150 volts and the field is of a value of between 5 and 100 V/cm.

4. A process according to claim 1 or claim 3 characterised in that the suspension of pigment is formed by a suspension of titanium oxide.

5. A process according to claim 2 or claim 3 characterised by using a suspension of precipitation silica at a pH-value of between 3.5 and 10.

6. A process according to one of claims 2, 3 or 5 characterised in that the suspension of silica contains from 50 to 150 g/l of SiO$_2$ and has a resistivity of from 1 000 to 5 000 Ωcm.

7. A process according to one of claims 1 to 6 characterised by introducing an additive into the suspension from the group of mineral and organic additives.

8. A process according to claim 7 characterised in that the additive is from the group of barium hydroxide and sodium aluminate and silicate.

9. A process according to one of claims 7 and 8 characterised in that the suspension contains from 400 to 1 200 ppm of additive.

10. A process according to one of claims 1 to 9 characterised in that the anode is from the group consisting of Fe, Cu, Al and Zn, graphite and platinum.

11. A novel silica cake exhibiting a reversibility character and containing from 15 to 40 % of dry matter for a pH-value of between 10 and 3.5 characterised in that it can be produced by carrying out the process according to one of claims 2, 3 and 5 to 10.

12. A novel cake which can be disintegrated according to claim 11, characterised in that it has a pH-value of 6 for a proportion of dry matter of between 20 and 28 %.

13. A novel cake which can be disintegrated according to claim 12 characterised in that it has at least 20 % of dry matter for silicas with specific surface areas of at least 200 m$^2$/g.

## Patentansprüche

1. Verfahren zur Dehydratisierung einer Suspension von mineralischen Pigmenten, dadurch gekennzeichnet, daß man den spezifischen Widerstand der Suspension auf einen Wert zwischen 100 und 15 000 Ωcm, insbesondere zwischen 500 und 5 000 Ωcm einstellt, der ausreichend ist, um die Fällung des Pigments unter Einwirkung eines elektrischen Felds zu bewirken, und dann die Suspension der Einwirkung eines elektrischen Felds aussetzt.

2. Verfahren zur Dehydratisierung einer Suspension von Siliciumdioxid, dadurch gekennzeichnet, daß man den spezifischen Widerstand der Suspension auf einen Wert zwischen 500 und 5 000 Ωcm einstellt, um die Fällung des Siliciumdioxids unter Einwirkung eines elektrischen Felds zu bewirken, und diese Suspension dann der Einwirkung eines elektrischen Felds aussetzt.

3. Verfahren nach einem der Ansprüche 1 oder 2, dadurch gekennzeichnet, daß die Spannung einen Wert zwischen 15 und 150 V und die Feldstärke einen Wert zwischen 5 und 100 V/cm aufweist.

4. Verfahren nach Anspruch 1 oder 3, dadurch gekennzeichnet, daß die Suspension des Pigments aus einer Suspension von Titanoxid besteht.

5. Verfahren nach Anspruch 2 oder 3, dadurch gekennzeichnet, daß man eine Suspension von gefälltem Siliciumdioxid mit einem pH zwischen 3,5 und 10 einsetzt.

6. Verfahren nach einem der Ansprüche 2, 3 oder 5, dadurch gekennzeichnet, daß die Suspension des Siliciumdioxids 50 bis 150 g/l Siliciumdioxid enthält und einen spezifischen Widerstand von 1 000 bis 5 000 Ωcm hat.

7. Verfahren nach einem der Ansprüche 1 bis 6, dadurch gekennzeichnet, daß man der Suspension ein mineralisches oder organisches Additiv zugibt.

8. Verfahren nach Anspruch 7, dadurch gekennzeichnet, daß das Additiv Bariumhydroxid, Natriumaluminat oder Natriumsilikat ist.

9. Verfahren nach den Ansprüchen 7 oder 8, dadurch gekennzeichnet, daß die Suspension zwischen 400 und 1 200 ppm des Additivs enthält.

10. Verfahren nach einem der Ansprüche 1 bis 9, dadurch gekennzeichnet, daß die Anode aus Eisen, Kupfer, Aluminium, Zink, Graphit oder Platin ist.

11. Neuer Siliciumdioxid-Filterkuchen mit reversiblem Charakter enthaltend 15 bis 40 % Trockensubstanz bei einem pH zwischen 10 und 3,5, dadurch gekennzeichnet, daß er durch Anwendung des Verfahrens gemäß einem der Ansprüche 2, 3 oder 5 bis 10 erhältlich ist.

12. Neuer durch Rühren zerfallender Filterkuchen nach Anspruch 11, dadurch gekennzeichnet, daß er bei einem Trockensubstanzanteil zwischen 20 und 28 % einen pH-Wert von 6 aufweist.

13. Neuer durch Rühren zerfallender Filterkuchen nach Anspruch 12, dadurch gekennzeichnet, daß er bei einer spezifischen Oberfläche der Kieselsäure von mindestens 200 m²/g mindestens 20 % Trockensubstanz enthält.

FIG.1

0 140 741

FIG. 2

FIG.3

FIG.4